# EUROPEAN PATENT APPLICATION

(11) **EP 3 136 328 A1**
(43) Date of publication of application: **01.03.2017**
(21) Application number: 16184685.2
(22) Date of filing: 18.08.2016
(51) Int. Cl.: G06Q 20/32, G06Q 20/38, G06Q 20/40

(54) **FRAUD RISK SCORE USING LOCATION INFORMATION WHILE PRESERVING PRIVACY OF THE LOCATION INFORMATION**

(30) Priority: 21.08.2015 US 201514831902
(71) Applicant: Pitney Bowes Inc., Danbury, CT 06810 (US)
(72) Inventor: Olumofin, Femi, Cupertino, CA California 95014 (US); Zhang, Jun, Shelton, CT Connecticut 06484 (US)
(74) Representative: Hoffmann Eitle

(57) **Abstract**

Solutions that protect consumer location information yet still enable the use of such location information in the determination of fraud risk scores are provided. Cryptographic techniques of private information retrieval (PIR) and homomorphic encryption are used to protect consumer location information even as it is used to enhance fraud risk scores. PIR is used to enable an issuer to retrieve non-specific location information using a consumer mobile number as the query criterion without needing to share or disclose the mobile number with the service provider. Homomorphic encryption is used to protect location information of mobile consumers, while ensuring card issuers are only able to learn non-specific information about the location of the consumer.

## Description

Embodiments of the present invention relate to using location information to enhance fraud risk scores for debit/credit card payments in the process of being authorized, while providing privacy protection for the location information.

In 2012, payment card issuers, merchants, and their acquiring banks worldwide lost $11.27 billion to fraudulent transactions, up 14.6% from 2011. The United States accounted for about half of the global credit/debit card fraud losses ($5.3 billion) and fraud losses continue to rise year over year. As mobile devices with GPS capabilities are becoming pervasive, payment card processors are beginning to embrace solutions that use location information to improve the precision of fraud risk scores for payments in process. A payment transaction with a fraud risk score above a certain threshold will be categorized as having a high probability of being fraudulent, and therefore will be declined. The use of location information for determining a fraud risk score is based on the premise that today's consumers usually carry their smartphones with them at all times, and therefore their smartphone will be in the same location as the consumer attempting to make a purchase. When a consumer swipes her payment card at a point of sale terminal or submits the card information online, the card issuer responsible for authorizing the payment checks two pieces of location information and returns a score that lowers the fraud risk score if the locations are the same or a score that increases the fraud risk score if they are different. The first location is that of the payment, referred to as the payment location. It is the physical address/geographical coordinates of the point of sale or the approximate physical address/geographical coordinate of the computer from which an online payment was submitted. The computer location is determined from its IP address through IP-to-geolocation techniques. The second location, referred to as cardholder location, is the real-time location of the consumer's smartphone obtained from the consumer's phone's GPS or through the mobile service provider (e.g., AT&T, Sprint, Verizon etc.) using cellular tower or Wi-Fi positioning technologies. The cardholder location is compared with the payment location. If they are the same or they are spatially proximal based on a distance parameter, a negative score is returned to reduce the fraud risk score. If they are different, a positive location score is returned that will increase the fraud risk score.

Existing solutions using location information to enhance fraud risk scores do not consider the privacy of consumers' location information or other personal information. For example, the service provider obtains information each time the cardholder makes a purchase, as well as the location of the purchase. This can allow a service provider to correlate purchases from the same location over time and potentially infer relationships between cardholders and merchants. Additionally, the card issuing bank is also able to track the cardholder's location. As privacy awareness continues to rise consumers will increasingly object to any use of location information (including for fraud detection purposes) that does not guarantee the privacy of their location. In addition, solutions that release non-specific location information are preferred to those that leak exact location coordinates because consumers will more readily consent to the use of their non-specific location information than their exact location information. With the current solutions, issuing banks require the consent of the consumers/cardholders before providing their mobile numbers to service providers to obtain their location information. Similarly, a service provider needs consumer consent before it can provide customer location information to banks. Consent to use exact location information of consumers is difficult to obtain in practice and rarely ever scales for large user populations. Some financial institutions overcome the need to obtain consent by providing an app to the consumer (e.g., online banking app). Again, only a small fraction of consumers installs such apps, and when they do, the apps still require permission from the users to access their location information. It would therefore be desirable to have solutions that can protect consumer location information yet still enable the use of such location information in the determination of fraud risk scores.

Embodiments of the present invention alleviate the problems described above by providing solutions that protect consumer location information yet still enable the use of such location information in the determination of fraud risk scores.

In accordance with embodiments of the present invention, cryptographic techniques of private information retrieval (PIR) and homomorphic encryption are used to protect consumer location information even as it is used to enhance fraud risk scores. PIR is used to enable an issuer to retrieve non-specific location information using a consumer mobile number as the query criterion without needing to share or disclose the mobile number with the service provider. Homomorphic encryption is used to protect location information of mobile consumers, while ensuring card issuers are only able to learn non-specific information about the location of the consumer.

Therefore, it should now be apparent that embodiments of the invention substantially achieve all the above aspects and advantages. Additional aspects and advantages will be set forth in the description that follows.

The accompanying drawings illustrate presently preferred embodiments of the invention. As shown throughout the drawings, like reference numerals designate like or corresponding parts.
Figure 1 is a block diagram illustrating a system for determining a fraud risk score using location information according to an embodiment of the present invention;
Figures 2A and 2B are flow diagrams illustrating the processing performed for determining a fraud risk score using location information according to an embodiment of the present invention; and
Figures 3A and 3B are flow diagrams illustrating the processing performed for determining a fraud risk score using location information according to another embodiment of the present invention.

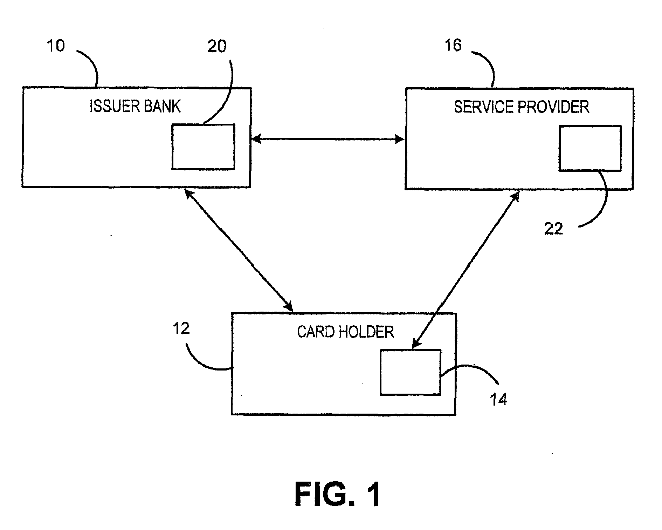

In describing embodiments of the present invention, reference is made to the drawings, wherein there is seen in Fig. 1 in block diagram form a system for determining a fraud risk score using location information according to an embodiment. As illustrated in Fig. 1, there are three main parties involved in the authorization process for debit/credit card (hereinafter referred to as card payments) - the issuer bank(s) 10, cardholder(s) 12, and a service provider(s) 16. The issuer bank 10 is a financial institution that issues credit and/or debit cards to its customers or cardholders. The issuer bank 10 knows the cardholder mobile number and wants to obtain the cardholder's location information from the service provider and use it during payment authorization to enhance the precision of fraud risk scores. In other words, the issuer bank 10 wants to detect fraudulent uses of their card at the point of payment using the cardholder location information. The cardholders 12 are consumers that have been issued a card by some issuer bank 10. Each cardholder 12 has an associated mobile device 14, e.g., smartphone or the like. The cardholders 12 are willing to allow issuer banks 10 to infer fraudulent transactions using their location information that can be obtained from their mobile device, but are concerned about the privacy of their location information. They like the fact that their location information can help get the bank to authorize some of their purchases, which the bank would have declined otherwise (false negatives). However, they would still like to retain control of their location data. The service provider(s) 16 are providers of mobile phone services to cardholders 12. Examples include AT&T, Sprint, Verizon, T-Mobile, etc. By the nature of their service and by law, these providers constantly maintain an up-to-date list of the location information of the devices on their network. Such information is useful, for example, in determining the closest cell tower to use for routing a call to a device. Location-as-a-Service Providers (LSP) can be used in the place of service providers to implement this embodiment. LSP usually have contracts with multiple service providers, enabling a single LSP to be used in the place of multiple service providers.

Each of the issuer bank(s) 10 and service providers(s) 16 operate a respective server 20, 22. Servers 20, 22 may be coupled to a database (not shown), which may be any suitable type of memory device utilized to store information. The servers 20, 22 may be coupled to a network, such as, for example the Internet, to allow communication with other servers. Servers 20, 22 may be a mainframe or the like that includes at least one processing device. Servers 20, 22 may be specially constructed for the required purposes, or may comprise a general purpose computer selectively activated or reconfigured by a computer program (described further below) stored therein. Such a computer program may alternatively be stored in a computer readable storage medium, such as, but not limited to, any type of disk including floppy disks, optical disks, CD-ROMs, and magnetic-optical disks, read-only memories (ROMs), random access memories (RAMs), EPROMs, EEPROMs, magnetic or optical cards, or any type of media suitable for storing electronic instructions, which are executable by the processing device. One of ordinary skill in the art would be familiar with the general components of a computing system upon which the method of an embodiment may be performed.

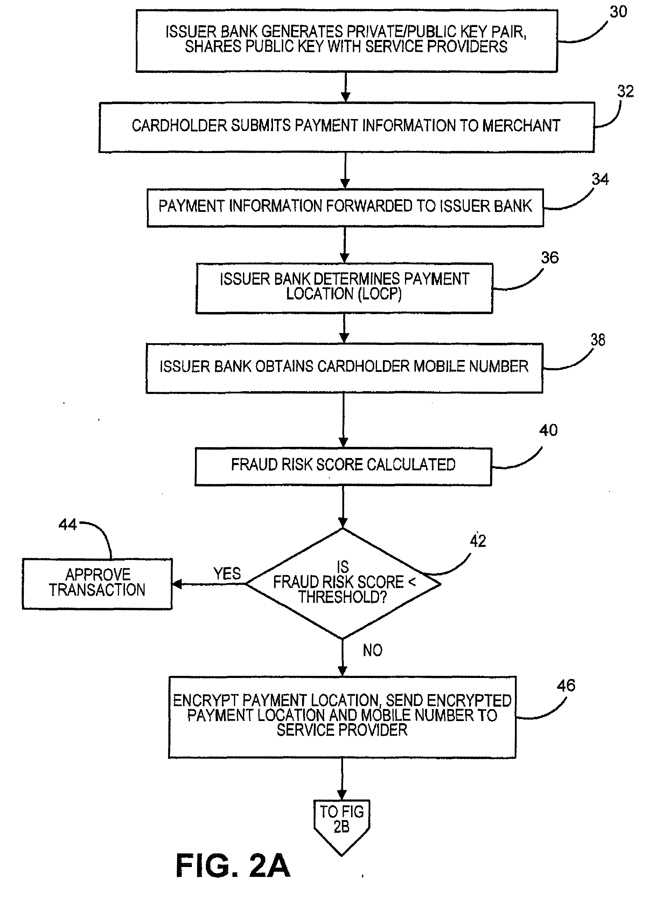

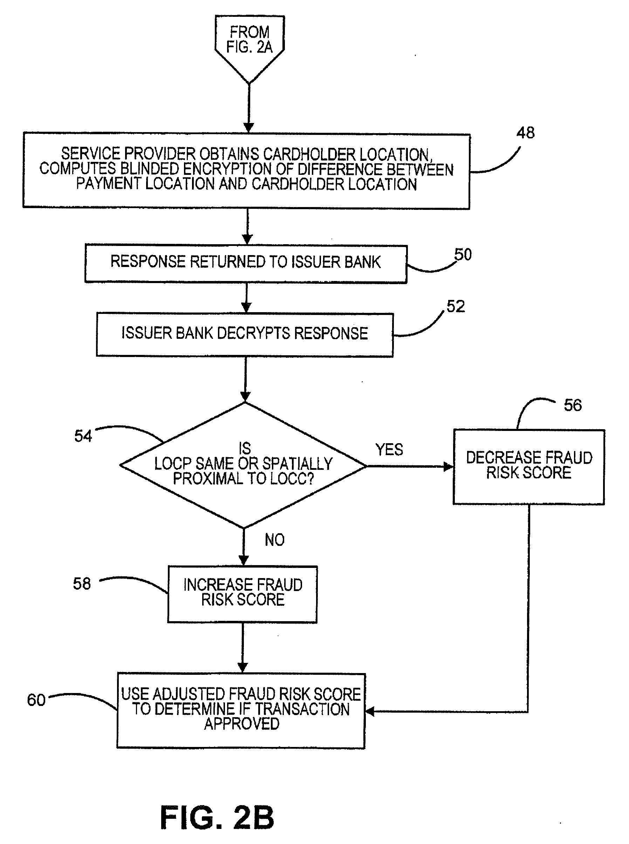

According to an embodiment of the present invention, the system illustrated in Fig. 1 uses additively or fully homomorphic encryption to provide better cardholder privacy when determining a fraud risk score. Figures 2A and 2B are flow diagrams illustrating the processing performed for determining a fraud risk score using location information according to an embodiment of the present invention. As a set-up procedure, in step 30 the issuer bank 10 generates a private/public key pair using an additive homomorphic cryptosystem, such as, for example, Paillier's cryptosystem, and shares the public key with the service provider 16. An additively homomorphic cryptosystem means that given the public key and the encryption of two messages *m*₁ and *m*₂, one can compute the encryption of *m*₁ + *m*₂ without having to decrypt the messages, thereby maintaining the privacy of the messages. The same or different key pairs can be used for the different service providers 16. It should be understood that the key generation process in step 30 only needs to occur once, or can occur on some other periodic basis as deemed necessary by the issuer bank 10. In step 32, a payment transaction by a cardholder 12 of an issuer bank 10 begins with the cardholder 12 submitting payment information to a merchant who forwards it to the merchant's bank. Such submission can be made, for example, through a point-of-sale (POS) terminal or an Internet connected device such as a computer, tablet or a smartphone 14. The payment information can include, for example, the name of the merchant, the name of the cardholder, the amount of the transaction, a description of the transaction, the physical location of the merchant POS terminal, the location of the cardholder's computer if the transaction is an on-line transaction, etc.

In step 34, the payment information is forwarded to the server 20 of the issuer bank 10 through the merchant bank. In step 36, using the payment information, the server 20 determines the payment location (locp). In step 38, based on the identification of the cardholder 12 in the payment information, the server 20 obtains information associated with the cardholder that it maintains in a database that includes the number of the cardholder's mobile device 14. In step 40, the server 20 then computes a fraud risk score using known techniques, (e.g., using payment velocity, proxy detection, profiling and related techniques). In step 42, it is determined if the fraud risk score is below a certain threshold (as may be determined by the issuer bank 10). If in step 42, the fraud risk score is below the predetermined threshold (meaning the issuing bank 10 believes there is little risk of the current transaction being fraudulent), then in step 44 the transaction is approved as being as non-fraudulent.

However, if in step 42 it is determined that the fraud risk score exceeds the threshold, then the server 20 will utilize the location information of the cardholder 12 to adjust the fraud risk score. In step 46, the server 20 of the issuer bank 10 encrypts the payment location (locp) and sends the encrypted payment location along with the number of the cardholder's mobile device 14 to the server 22 of the service provider 16. In step 48, the server 22 determines the location of the mobile device 14, which is deemed to be the location of the cardholder 12, using its mobile location data, and computes using the public key received from the issuer bank 10 a homomorphically blinded encryption of the difference between the payment location (locp) and the cardholder location (locc); that is response = E(r(locp - locc)), where r is a random non-zero integer. The variable r is utilized to blind the result of (locp - locc). Without r, it would be possible for the issuer bank 10 to indiscriminately determine the location of any customer at any time by making a request to the service provider 16, even if the customer was not doing any transaction. Note that the server 22 is able to carry out this computation only having the encrypted value of locp, and therefore is never actually provided with the location of the purchase made by the cardholder 12. In step 50, the server 22 returns the encrypted response back to the server 20 of the issuer bank 10 issuer. In step 52, the server 20 of the issuer bank 10 decrypts the response using the private key. The result of decrypting E(r(locp - locc)) is either zero or any other random integer. In step 54 the server 20 determines if the payment location and cardholder location are the same or spatially proximal. Locations are spatially proximal if they are located in the same grid. A spatial grid structure having a plurality of cells is utilized to quantize and index locations. A grid can be defined in many ways, provided that each location with a given latitude/longitude is associated with a unique cell of the grid. For example, the United States can be divided in many 100 x 100 meter cells that are each associated with a unique identifier. The longitude and latitude of a user's current location will determine the grid used to situate the user. It should be understood, of course, that the cell size need not be limited to the example provided above, and could be any size and shape, e.g., hexagonal, as desired. When the result from step 52 is zero, it means the locp is the same as locc, e.g., is within the same grid, (a "yes" determination); otherwise the locations are not the same, e.g., they are in different grids (a "no" determination). The difference is hidden (blinded with r). If in step 54 it is determined that the payment location (locp) and cardholder location (locc) are the same, then in step 56 the server 20 of the issuer bank 10 uses a negative location score to reduce the fraud risk score, whereas if in step 54 it is determined that the payment location and cardholder location are not the same, then in step 58, it uses a positive location score to increase the fraud risk score. In step 60, the server 20 of the issuer bank utilizes the adjusted fraud risk score to determine if the transaction will be approved or not.

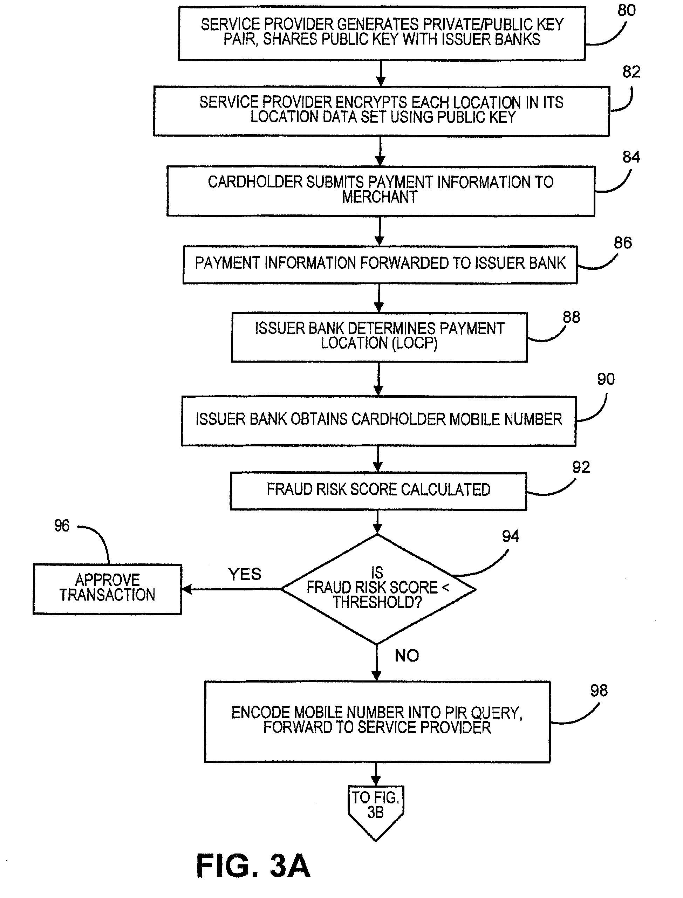

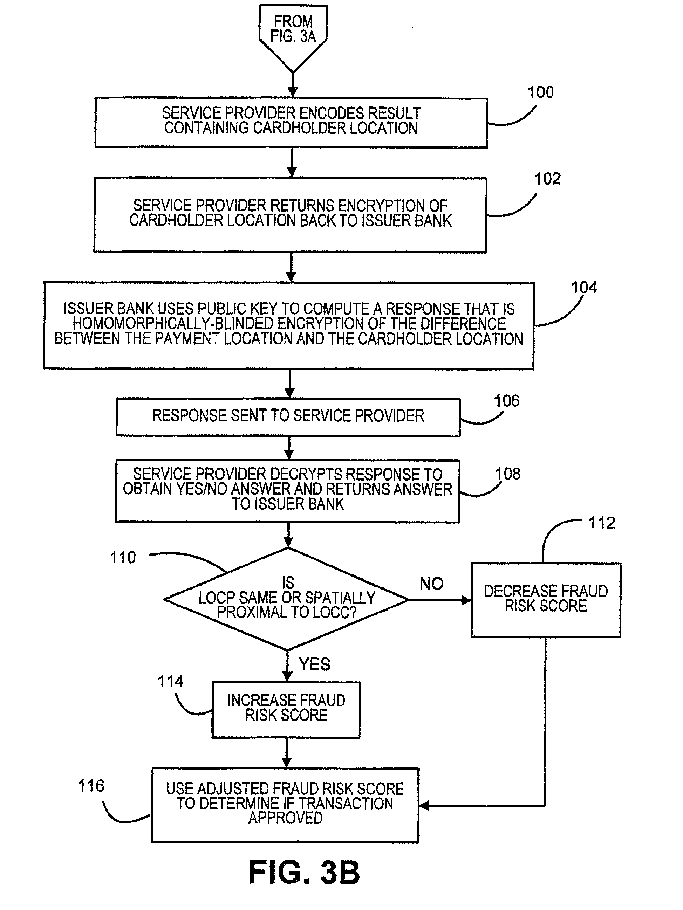

While the processing described in Figs. 2A and 2B protects the privacy of the cardholder's location and transaction information from the service providers 16 (recall that the service provider only receives the payment location in encrypted form), the service provider 16 still learns location information about every purchase made by the cardholder (since the service provider determines the location of the cardholder when requested) and can infer relationships about cardholders and merchants using available spatial information. Figures 3A and 3B are flow diagrams illustrating the processing performed for determining a fraud risk score using location information according to another embodiment of the present invention in which Private Information Retrieval (PIR) and homomorphic encryption are used to provide strong privacy guarantees for cardholders' location information. Private Information Retrieval (PIR), as is known in the art, helps to provide access privacy by preventing sensitive information in client queries from being disclosed to a service host during data lookup. It provides a means for retrieving data from a database/service without the database/service (or its provider) being able to learn any information about which particular item was retrieved. Note that PIR does not hinder data retrieval functions of the service, but it enhances it in such a manner that keeps any information in a query and its result confidential or hidden from the service and other third parties.

Referring now to Fig. 3A, in step 80, the server 22 of the service provider 16 generates a private/public key pair using an additive homomorphic cryptosystem as previously described, and provides the public key to the server 20 of issuer bank 10. In step 82, the server 22 of service provider 16 encrypts each location in its location data set (the current location of each mobile device 14 on its network) using the public key. Whenever a mobile subscriber changes location, an encryption of the new location is used to update the data set. In step 84, a payment transaction by a cardholder 12 of an issuer bank 10 begins with the cardholder 12 submitting payment information to a merchant who forwards it to the merchant's bank. Such submission can be made, for example, through a point-of-sale (POS) terminal or an Internet connected device such as a computer, tablet or a smartphone 14. The payment information can include, for example, the name of the merchant, the name of the cardholder, the amount of the transaction, a description of the transaction, the physical location of the merchant POS terminal, the location of the cardholder's computer if the transaction is an on-line transaction, etc.

In step 86, the payment information is forwarded to the server 20 of the issuer bank 10 through the merchant bank. In step 88, using the payment information, the server 20 determines the payment location (locp). In step 90, based on the identification of the cardholder 12 in the payment information, the server 20 obtains information associated with the cardholder that it maintains in a database that includes the number of the cardholder's mobile device 14. In step 92, the server 20 then computes a fraud risk score using known techniques, (e.g., using payment velocity, proxy detection, profiling and related techniques). In step 94, it is determined if the fraud risk score is below a certain threshold (as may be determined by the issuer bank 10). If in step 94, the fraud risk score is below the predetermined threshold (meaning the issuing bank 10 believes there is little risk of the current transaction being fraudulent), then in step 96 the transaction is approved as being as non-fraudulent.

However, if in step 94 it is determined that the fraud risk score exceeds the threshold, then the server 20 will utilize the location information of the cardholder 12 to adjust the fraud risk score. In step 98, the server 20 uses PIR to encode the mobile number of the cardholder into a PIR query, which it forwards to the server 22 of the service provider 16. In step 100, the server 22 encodes a result containing the cardholder location (locc) using the received query in conjunction with its list of encrypted locations to determine the location of the user. In step 102, the server 22 returns the encoded result, i.e., an encryption of locc, back to the server 20 of the issuer bank 20. Note that because PIR is utilized, the service provider 16 does not learn any information about the mobile number included in the query or the corresponding encrypted cardholder location (locc) that was returned back to the issuer bank 10. In step 104, the server 20 of the issuer bank 10 uses the public key received from the service provider 16 to compute a response that is a homomorphically-blinded encryption of the difference between the payment location (locp) and the cardholder location (locc), that is response = E(r(locp - locc)), where r is a random non-zero integer. It does this without learning locc. In step 106, the server 20 sends the computed response to the server 22 of the service provider 16. In step 108, the server 22 decrypts the response using the private key to obtain a yes/no answer to the query of whether the payment location is the same as the cardholder location (as described above with respect to Fig. 2), which it returns to the server 20 of the issuer bank 10. The issuer bank 10 can then use the result to enhance the fraud risk score for the transaction. In step 110 the server 20 determines, using the answer from the service provider 16, if the payment location and cardholder location are the same. If in step 110 it is determined that the payment location (locp) and cardholder location (locc) are the same, then in step 112 the server 20 of the issuer bank 10 uses a negative location score to reduce the fraud risk score, whereas if in step 110 it is determined that the payment location and cardholder location are not the same, then in step 114, it uses a positive location score to increase the fraud risk score. That is, the issuer bank 10 uses a negative location score to reduce the fraud risk score if a "yes" response if received in step 108 and a positive location score to increase the fraud risk score if "no" response is received in step 108. In step 116, the server 20 of the issuer bank 10 utilizes the adjusted fraud risk score to determine if the transaction will be approved or not. Thus, using the processing as described in Figs. 3A and 3B, the service provider 16 is unable to learn or link any information (mobile number or location data) with any cardholder, thereby guaranteeing cardholder privacy. The issuer bank 10 as well cannot indiscriminately track or stalk cardholders using their location information from the service provider, because it only gets a yes/no response.

While preferred embodiments of the invention have been described and illustrated above, it should be understood that these are exemplary and are not to be considered as limiting. Additions, deletions, substitutions, and other modifications can be made without departing from the scope of the appended claims.

## Claims

1. A computer implemented method for using location information of a consumer to adjust a fraud risk score for a payment card transaction being performed by the consumer with a merchant, the method comprising:
receiving, by a server via a network, information related to the payment card transaction from the merchant;
determining, by the server, a payment location based on the information related to the payment card transaction received from the merchant;
encrypting, by the server using a public key of an additively homomorphic cryptosystem, the determined payment location;
obtaining, by the server, an identification associated with a mobile device of the consumer;
sending, by the server via the network, the encrypted payment location and obtained identification to a service provider that provides mobile services to the mobile device of the consumer, wherein the service provider determines a current location of the mobile device of the consumer using the identification associated with the mobile device of the consumer;
receiving, by the server from the service provider, a blinded encryption, computed using the public key, of a difference between the payment location and current location of the mobile device of the consumer;
decrypting, by the server using a private key corresponding to the public key, the blinded encryption of the difference between the payment location and current location of the mobile device of the consumer to produce a result;
determining, by the server, if the payment location and current location of the mobile device of the consumer are spatially proximal based on the result; and
adjusting, by the server, a fraud risk score for the payment card transaction based on the determination that the payment location and current location of the mobile device of the consumer are spatially proximal.

2. The method of claim 1, wherein adjusting the fraud risk score for the payment card transaction further comprises:
increasing the fraud risk score if the payment location and current location of the mobile device of the consumer are not spatially proximal; and
decreasing the fraud risk score if the payment location and current location of the mobile device of the consumer are spatially proximal.

3. The method of claim 1 or claim 2, wherein determining if the payment location and current location of the mobile device of the consumer are spatially proximal based on the result further comprises:
determining that the payment location and current location of the mobile device of the consumer are spatially proximal if the result is zero; and
determining that the payment location and current location of the mobile device of the consumer are not spatially proximal if the result is not zero.

4. The method of any preceding claim, wherein determining if the payment location and current location of the mobile device of the consumer are spatially proximal further comprises:
determining if the payment location and current location of the mobile device of the consumer are within a same grid of a spatial grid having a plurality of cells utilized to quantize and index locations.

5. The method of any preceding claim, wherein the identification associated with the mobile device of the consumer is a telephone number of the mobile device.

6. The method of any preceding claim, wherein the information related to the payment card transaction includes at least one of the merchant's name, the consumer's name, an amount of the transaction, a description of the transaction, a physical location of point of sale terminal operated by the merchant, and a location of computer used by the consumer if the transaction is an on-line transaction.

7. A computer implemented method for using location information of a consumer to adjust a fraud risk score for a payment card transaction being performed by the consumer with a merchant, the method comprising:
receiving, by a server via a network, information related to the payment card transaction from the merchant;
determining, by the server, a payment location based on the information related to the payment card transaction received from the merchant;
obtaining, by the server, an identification associated with a mobile device of the consumer;
encoding, by the server, the identification associated with the mobile device of the consumer into a private information retrieval query;
sending, by the server via the network, the private information retrieval query to a service provider that provides mobile services to the mobile device of the consumer;
receiving, by the server via the network from the service provider, a current location of the mobile device of the consumer that is encrypted using a public key;
computing, by the server using the public key, a homomorphically-blinded encryption of a difference between the payment location and current location of the mobile device of the consumer to produce a response;
sending, by the server via the network, the response to the service provider, wherein the service provider uses a private key corresponding to the public key the decrypt the response, the decrypted response indicating if the payment location and current location of the mobile device of the consumer are spatially proximal;
receiving, by the server via the network from the service provider, the decrypted response; and
adjusting, by the server, a fraud risk score for the payment card transaction based on the indication that the payment location and current location of the mobile device of the consumer are spatially proximal.

8. The method of claim 7, wherein adjusting the fraud risk score for the payment card transaction further comprises:
increasing the fraud risk score if the payment location and current location of the mobile device of the consumer are not spatially proximal; and
decreasing the fraud risk score if the payment location and current location of the mobile device of the consumer are spatially proximal.

9. The method of claim 7 or claim 8, wherein the payment location and current location of the mobile device of the consumer are spatially proximal if the decrypted response is zero; and
the payment location and current location of the mobile device of the consumer are not spatially proximal if the decrypted response is not zero.

10. The method of any of claims 7 to 9, wherein the payment location and current location of the mobile device of the consumer are spatially proximal if the payment location and current location of the mobile device of the consumer are within a same grid of a spatial grid having a plurality of cells utilized to quantize and index locations.

11. The method of any of claims 7 to 10, wherein the identification associated with the mobile device of the consumer is a telephone number of the mobile device.

12. The method of any of claims 7 to 11, wherein the information related to the payment card transaction includes at least one of the merchant's name, the consumer's name, an amount of the transaction, a description of the transaction, a physical location of point of sale terminal operated by the merchant, and a location of computer used by the consumer if the transaction is an on-line transaction.
